# EUROPEAN PATENT SPECIFICATION

(11) **EP 0 986 909 B1**
(45) Date of publication and mention of the grant of the patent: **14.08.2002**
(21) Application number: 98928859.2
(22) Date of filing: 05.06.1998
(51) Int. Cl.: H04N 7/16

(54) **SYSTEM AND METHOD FOR RECORDING PAY TV PROGRAMS**
SYSTEM UND VERFAHREN ZUR AUFNAHME VON GEBÜHRENPFLICHTIGEN PROGRAMMEN
SYSTEME ET PROCEDE POUR ENREGISTREMENT D'EMISSIONS DE T.V. PAYANTES

(30) Priority: 06.06.1997 US 48879 P
(43) Date of publication of application: 22.03.2000
(73) Proprietor: THOMSON CONSUMER ELECTRONICS, INC., Indianapolis, IN 46290-1024 (US)
(72) Inventor: SCHNEIDEWEND, Daniel, Richard, Fishers, IN 46038 (US); GEIS, Jerome, Paul, Noblesville, IN 46060 (US); RANDALL, Darrel, Wayne, Danville, IN 46122 (US); MCLANE, Michael, Joseph, Indianapolis, IN 46240 (US); BROWN, Megan, Louise, Carmel, IN 46033 (US); WESTLAKE, Mark, Sheridan, Fishers, IN 46038 (US)
(74) Representative: Kohrs, Martin
(86) International application number: PCT/US98/11304
(87) International publication number: WO 98/56178

(56) References cited:
- EP-A- 0 508 394
- WO-A-89/09528
- WO-A-94/21081
- WO-A-95/28799
- GB-A- 2 257 557
- "PERSONAL TELEVISION SCHEDULE SERVICE" IBM TECHNICAL DISCLOSURE BULLETIN, vol. 39, no. 8, August 1996, pages 237-244, XP000638200
- JASJIT SINGH SAINI: "PAY-TV DECODER WITH AUTOMATIC VCR RECORDING FEATURES" PROCEEDINGS OF THE INTERNATIONAL CONFERENCE ON CONSUMER ELECTRONICS (ICCE), ROSEMONT, JUNE 2 - 4, 1992, no. CONF. 11, 2 June 1992, pages 54-55, XP000369180 INSTITUTE OF ELECTRICAL AND ELECTRONICS ENGINEERS

## Description

### FIELD OF INVENTION

This invention generally relates to the field of user interface control for electronics devices and more particularly, to a system and method for automatically coordinating a purchase and recording of a program.

### BACKGROUND OF INVENTION

Electronic devices such as televisions and personal computers (PCs) require a control system that includes a user interface system. Typically, a user interface system provides information to a user and simplifies use of the device. One example of a user interface is an electronic menuing system in a television system. The menuing system allows a user to easily interact with and control a television system which is becoming more complex.

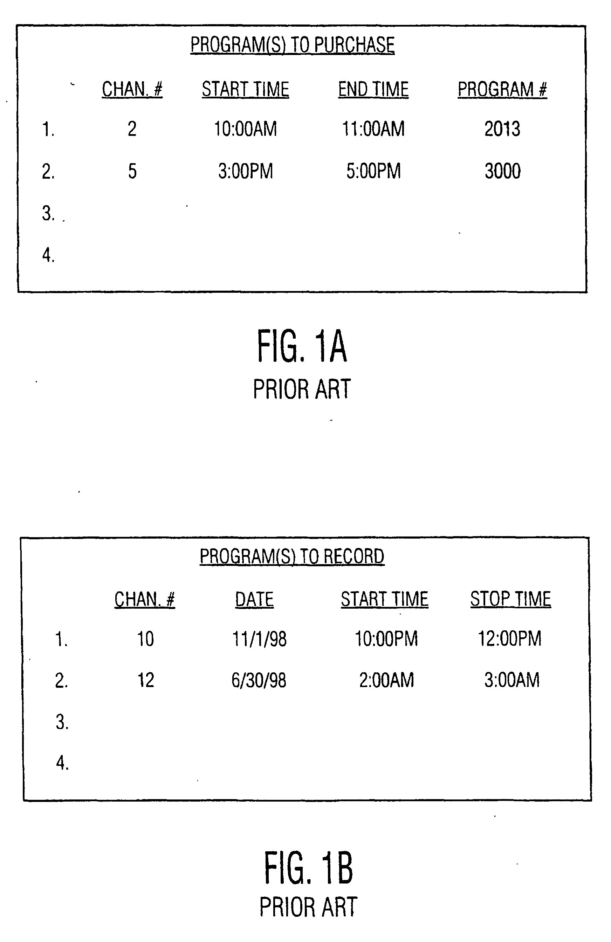

For example, various satellite television receivers are available today to receive direct satellite television service such as DirecTV™ service, provided by Hughes Electronics, Inc. Satellite television provides a variety of services, including pay-per-view. Pay-per-view service allows a user to purchase in advance, for example, a movie or a sports event. In order to purchase a pay-per-view program, a user is typically prompted, for example, by a "purchase" screen as shown in Fig. 1A, in order to select which program to purchase. To purchase a program, a user may, for example, simply enter a unique program ID such as "2013" assigned by the service provider and/or input specific channel and time information, as shown in Fig. 1A.

Additionally, these satellite receivers also allow a user via, for example, a "timer" screen shown in Fig. 1 B, to select which programs are to be recorded by a VCR connected to the receivers. Once a user entered the required information (e.g., channel number, start time, end time), the receiver will instruct an Infra-Red (IR) blaster to control the VCR appropriately at the pre-selected time. An IR blaster is basically a programmable VCR remote control emulator controlled by the satellite receivers. It is positioned in front of the VCR remote sensor of an attached VCR and will transmit commands such as "ON" and "RECORD" under the control of the satellite receivers at the appropriate time, according to the timer screen information entered by the users.

There is currently no linkage or coordination between the two processes or associated user screens for doing program purchases and recordings. That is, a user who wants to, for example, both purchase and record a program needs to provide information separately to both the purchase and the record processes by filling out two separate user screens (e.g., "purchase" and "timer" screens). Also, since there is no linkage between these two processes, a user who want to cancel a program from the purchase process and the record process will have to basically perform the same task twice. This is time consuming and inefficient.

### SUMMARY OF THE INVENTION

The invention is defined in its broadest aspects in claims 1, 6, 11, 12, 13, 16 and 17.

The present inventors recognize that it is desirable to be able to coordinate and link the process of purchasing a program with the process of recording a program. Therefore, an apparatus and a method for processing a plurality of programs are provided having the following features.

A program may be selected from a plurality of programs for recording. The selected program is then stored into a first list of programs representing programs selected for recording. A program may also be selected from the plurality of programs for both purchasing and recording. The selected program is then stored into a second list of programs representing programs purchased. This selected program is then also automatically stored into the first list of programs representing programs selected for recording. In addition, when canceling a previously purchased program, a determination is made to see whether the purchased program also appears in the list of programs selected for recording. If it appears in the recording list, then the program is also automatically removed from the recording list, when the purchase is canceled.

### BRIEF DESCRIPTION OF THE DRAWINGS

In the drawing:
Figs. 1A and 1B show, respectively, a "purchase" screen and a "record" screen of a prior art system.
Fig. 2 shows an example of a television system suitable for processing user commands and displaying exemplary user interface screens in accordance to the present invention.
Fig. 3 shows an example of a digital video processing apparatus suitable for processing user commands and displaying exemplary user interface screens in accordance with the present invention.
Fig. 4 shows a block diagram of a specific implementation of a digital satellite system suitable for processing user commands and displaying exemplary user interface screens in accordance with the present invention.
Fig. 5 shows an example of a program guide for selecting programs.
Figs. 6A and 6B show a flowchart, in accordance with the present invention, for processing user commands and displaying exemplary user interface screens in accordance with the present invention.
Fig. 7 shows an exemplary flowchart, in accordance with the present invention, for clearing a timer for recording an event.
Fig. 8 shows an exemplary flowchart, in accordance with the present invention, for canceling a purchase of an event.
Fig. 9 shows an exemplary user interface screen which allows a user to both buy and record a selected program.
Fig. 10 shows an exemplary user interface screen for listing information regarding programs selected for purchases.
Fig. 11 shows an exemplary user interface screen which allows a user to select programs for recording.
Fig. 12 shows an exemplary user interface screen which allows a user to cancel a previously purchased program.

### DETAILED DESCRIPTION

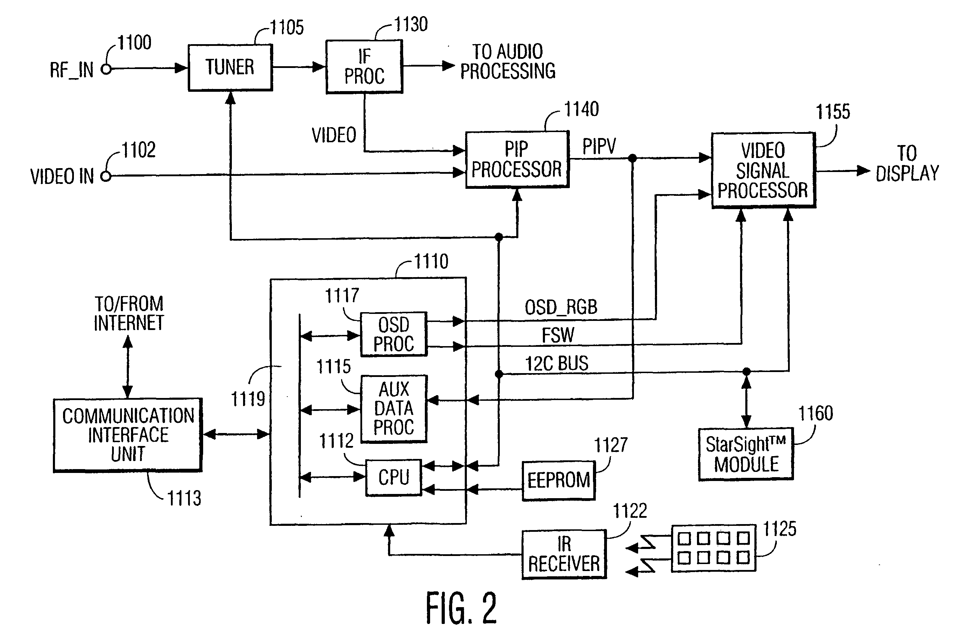

Fig. 2 shows an example of a television system suitable for processing user commands and displaying exemplary user interface screens in accordance with the present invention. The television receiver shown in Fig. 2 is capable of processing both analog NTSC television signals and internet information. The system shown in FIG. 1 has a first input 1100 for receiving television signal RF_IN at RF frequencies and a second input 1102 for receiving baseband television signal VIDEO IN. Signal RF_IN may be supplied from a source such as an antenna or cable system while signal VIDEO IN may be supplied, for example, by a video cassette recorder (VCR). Tuner 1105 and IF processor 1130 operate in a conventional manner for tuning and demodulating a particular television signal that is included in signal RF_IN. IF processor 1130 produces baseband video signal VIDEO representing the video program portion of the tuned television signal. IF processor 1130 also produces a baseband audio signal that is coupled to an audio processing section (not shown in FIG. 1) for further audio processing. Although FIG. 2 shows input 1102 as a baseband signal, the television receiver could include a second tuner and IF processor similar to units 1105 and 1130 for producing a second baseband video signal from either signal RF_IN or from a second RF signal source.

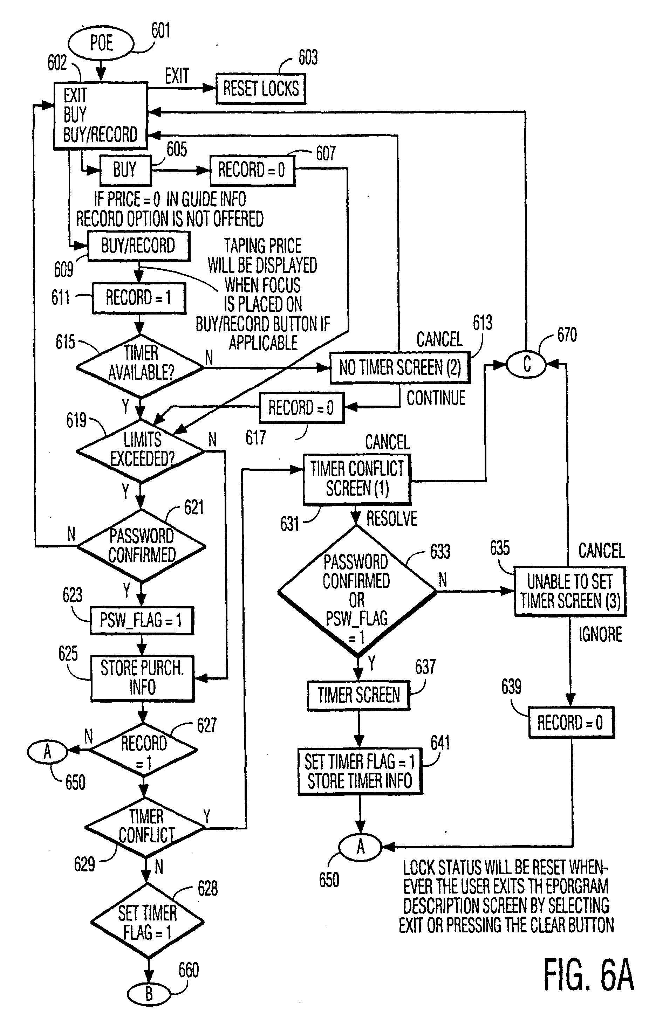

The system shown in FIG. 2 also includes a main microprocessor (mP) 1110 for controlling components of the television receiver such as tuner 1105, picture-in-picture processing unit 1140, video signal processor 1155, and StarSight® data processing module 1160. As used herein, the term "microprocessor" represents various devices including, but not limited to, microprocessors, microcomputers, microcontrollers and controllers. Microprocessor 1110 controls the system by sending and receiving both commands and data via serial data bus I²C BUS which utilizes the well-known I²C serial data bus protocol. More specifically, central processing unit (CPU) 1112 within mP 1110 executes control programs contained within memory, such as EEPROM 1127 shown in FIG. 2, in response to commands provided by a user, e.g., via IR remote control 1125 and IR receiver 1122. For example, activation of a "CHANNEL UP" feature on remote control 1125 causes CPU 1112 to send a "change channel" command along with channel data to tuner 1105 via I²C BUS. As a result, tuner 1105 tunes the next channel in the channel scan list. Another example of a control program stored in EEPROM 1127 is software for implementing the operations shown in Figs. 6A, 6B, 7 and 8 in flow chart form to be discussed below and in accordance with the present invention.

Main microprocessor 1110 also controls the operation of a communications interface unit 1113 for providing the capability to upload and download information to and from the internet. Communication interface unit 1113 includes, for example, a modem for connecting to an internet service provider, e.g., via a telephone line or via a cable television line. The communication capability allows the system shown in Figure 1 to provide email capability and internet related features such as web browsing in addition to receiving television programming.

CPU 1112 controls functions included within mP 1110 via bus 1119 within mP 1110. In particular, CPU 1112 controls auxiliary data processor 1115 and on-screen display (OSD) processor 1117. Auxiliary data processor 1115 extracts auxiliary data such as StarSight® data from video signal PIPV.

StarSight® data which provides program guide data information in a known format is typically received only on a particular television channel and the television receiver must tune that channel to extract StarSight® data. To prevent StarSight® data extraction from interfering with normal use of the television receiver, CPU 1112 initiates StarSight® data extraction by tuning the particular channel only during a time period when the television receiver is usually not in use (e.g., 2:00 AM). At that time, CPU 1112 configures decoder 1115 such that auxiliary data is extracted from horizontal line intervals such as line 16 that are used for StarSight® data. CPU 1112 controls the transfer of extracted StarSight® data from decoder 1115 via I²C BUS to StarSight® module 1160. A processor internal to the module formats and stores the data in memory within the module. In response to the StarSight® EPG display being activated (e.g., a user activating a particular key on remote control 125), CPU 1112 transfers formatted StarSight® EPG display data from StarSight® module 1160 via I²C BUS to OSD processor 1117.

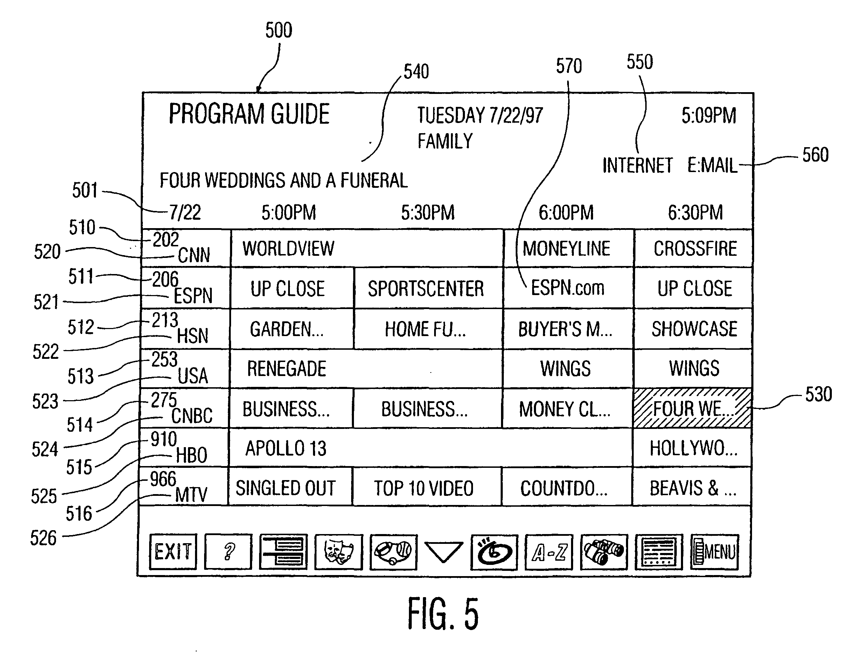

An EPG is an interactive, on-screen display feature that displays information analogous to TV listings found in local newspapers or other print media. In addition, an EPG also includes information necessary for collating and decoding programs. An EPG provides information about each program within the time frames covered by the EPG which typically ranges from the next hour up to seven days. The information contained in an EPG includes programming characteristics such as channel number, program title, start time, end time, elapsed time, time remaining, rating (if available), topic, theme, and a brief description of the program's content. EPGs are usually arranged in a two-dimensional table or grid format with time information on one axis and channel information on the other axis. An example of an program guide is shown in Fig. 5.

Unlike non-interactive guides that reside on a dedicated channel and merely scroll through the current programming on the other channels for the next 2 to 3 hours, EPGs allow viewers to select any channel at any time during some period into the future, e.g., up to seven days forward. Further EPG features include the ability to highlight individual cells of the grid containing program information. Once highlighted, the viewer can perform functions pertaining to that selected program. For instance, the viewer could instantly switch to that program if it is currently being aired. Viewers could also program one touch video cassette recording (VCR) or the like if the television is properly configured and connected to a recording device. Such EPGs are known in the art and described, for instance, in US Pat. Nos. 5,353,121; 5,479,268; and 5,479,266 issued to Young et al. and assigned to StarSight Telecast, Inc.

In addition, US Pat. No. 5,515,106, issued to Chaney et al., and assigned to the same assignee of the present invention, describes in detail an exemplary embodiment including data packet structure necessary to implement an exemplary program guide system. The exemplary data packet structure is designed so that both the channel information (e.g., channel name, call letters, channel number, type, etc.) and the program description information (e.g., content, title, rating, star, etc.) relating to a program may be transmitted from a program guide database provider to a receiving apparatus efficiently.

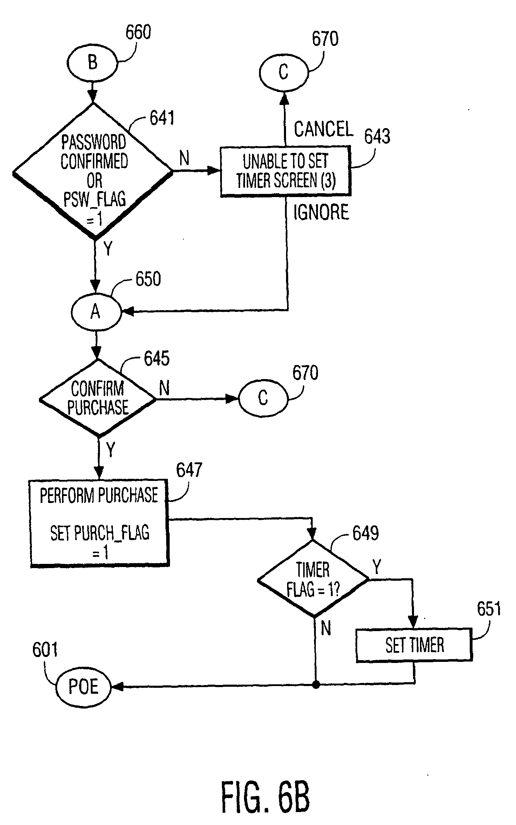

OSD processor 1117 operates in a conventional manner to produce R, G, and B video signals OSD_RGB that, when coupled to a displayed device (not shown), will produce a displayed image representing on-screen display information in according to flow charts to be shown in Figs. 6 - 8 and to be described later. OSD processor 1117 also produces control signal Fast-Switch (FSW) which is intended to control a fast switch for inserting signals OSD_RGB into the system's video output signal at times when an on-screen display is to be displayed. Therefore, when a user enables the various user interface screens of the present invention to be described later, OSD processor 1117 produces the corresponding signals OSD_RGB representing the on-screen display information previously stored or programmed in the memory 1127. For example, when a user enables an EPG, e.g., by activating a particular switch on remote control 1125, CPU 1112 enables processor 1117. In response, processor 1117 produces signals OSD_RGB representing the program guide data information previously extracted and already stored in memory, as discussed above. Processor 1117 also produces signal FSW indicating when the EPG is to be displayed.

Video signal processor (VSP) 1155 performs conventional video signal processing functions, such as luma and chroma processing. Output signals produced by VSP 1155 are suitable for coupling to a display device, e.g., a kinescope or LCD device (not shown in FIG. 2), for producing a displayed image. VSP 1155 also includes a fast switch for coupling signals produced by OSD processor 1117 to the output video signal path at times when graphics and/or text is to be included in the displayed image. The fast switch is controlled by control signal FSW which is generated by OSD processor 1117 in main microprocessor 1110 at times when text and/or graphics are to be displayed.

The input signal for VSP 1155 is signal PIPV that is output by picture-in-picture (PIP) processor 1140. When a user activates PIP mode, signal PIPV represents a large picture (large pix) into which a small picture (small pix) is inset. When PIP mode is inactive, signal PIPV represents just the large pix, i.e., no small pix signal is included in signal PIPV. PIP processor 1140 provides the described functionality in a conventional manner using features included in unit 1140 such as a video switch, analog-to-digital converter (ADC), RAM, and digital to analog converter (DAC).

As mentioned above, the display data included in the EPG display is produced by OSD processor 1117 and included in the output signal by VSP 1155 in response to fast switch signal FSW. When controller 1110 detects activation of the EPG display, e.g., when a user presses an appropriate key on remote control 1125, controller 1110 causes OSD processor 1117 to produce the EPG display using information such as program guide data from StarSight® module 1160. Controller 1110 causes VSP 1155 to combine the EPG display data from OSD processor 1117 and the video image signal in response to signal FSW to produce a display including EPG. The EPG can occupy all or only a portion of the display area.

When the EPG display is active, controller 1110 executes an EPG control program stored in EEPROM 1127. The control program monitors the location of a position indicator, such as a cursor and/or highlighting, in the EPG display. A user controls the location of the position indicator using direction and selection keys of remote control 1125. Alternatively, the system could include a mouse device. Controller 1110 detects activation of a selection device, such as clicking a mouse button, and evaluates current cursor location information in conjunction with EPG data being displayed to determine the function desired, e.g., tuning a particular program. Controller 1110 subsequently activates the control action associated with the selected feature.

An exemplary embodiment of the features of the system shown in FIG. 2 that have been described thus far comprises an ST9296 microprocessor produced by SGS-Thomson Microelectronics for providing the features associated with mP 1110; an M65616 picture-in-picture processor produced by Mitsubishi for providing the described basic PIP functionality associated with PIP processor 1140; and an LA7612 video signal processor produced by Sanyo for providing the functions of VSP 1155.

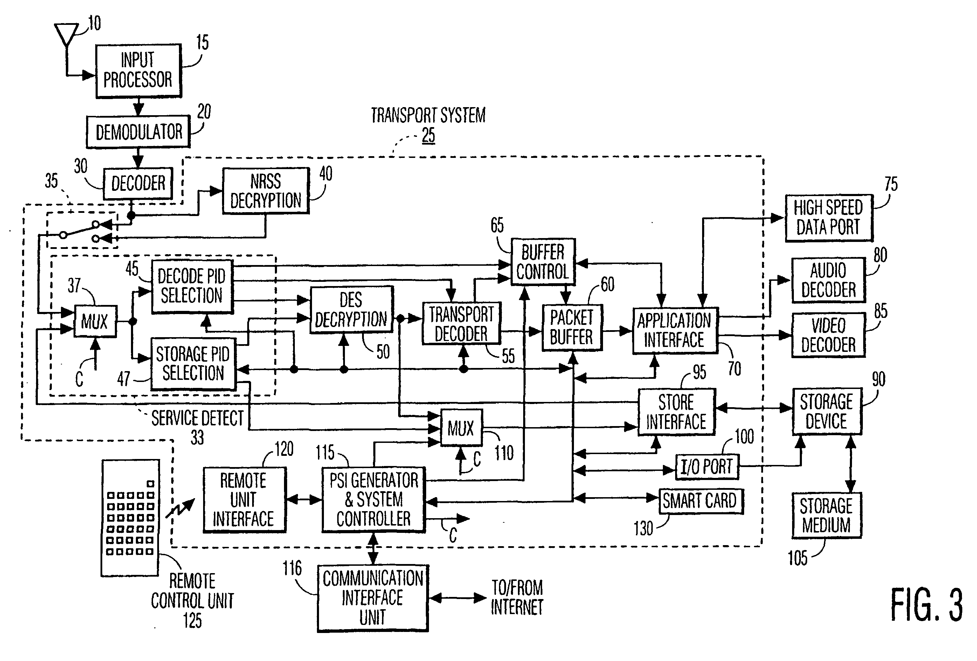

Fig. 3 shows another example of an electronic device capable of processing user commands and displaying exemplary user interface screens in accordance with the present invention. As described below, the system shown in Figure 3 is an MPEG compatible system for receiving MPEG encoded transport streams representing broadcast programs. However, the system shown in Figure 2 is exemplary only. The user interface system described herein is also applicable to other types of digital signal processing devices including non-MPEG compatible systems, involving other types of encoded datastreams. For example, other devices include digital video disc (DVD) systems and MPEG program streams, and systems combining computer and television functions such as the so-called "PCTV". Further, although the system described below is described as processing broadcast programs, this is exemplary only. The term 'program' is used to represent any form of packetized data such as telephone messages, computer programs, internet data or other communications, for example.

In overview, in the video receiver system of Figure 3, a carrier modulated with video data is received by antenna 10 and processed by unit 15. The resultant digital output signal is demodulated by demodulator 20 and decoded by decoder 30. The output from decoder 30 is processed by transport system 25 which is responsive to commands from remote control unit 125. System 25 provides compressed data outputs for storage, further decoding, or communication to other devices.

Video and audio decoders 85 and 80 respectively, decode the compressed data from system 25 to provide outputs for display. Data port 75 provides an interface for communication of the compressed data from system 25 to other devices such as a computer or High Definition Television (HDTV) receiver, for example. Storage device 90 stores the compressed data from system 25 on storage medium 105. Device 90, in a playback mode also supports retrieval of the compressed data from storage medium 105 for processing by system 25 for decoding, communication to other devices or storage on a different storage medium (not shown to simplify drawing).

Considering Figure 3 in detail, a carrier modulated with video data received by antenna 10, is converted to digital form and processed by input processor 15. Processor 15 includes radio frequency (RF) tuner and intermediate frequency (IF) mixer and amplification stages for down-converting the input video signal to a lower frequency band suitable for further processing. The resultant digital output signal is demodulated by demodulator 20 and decoded by decoder 30. The output from decoder 30 is further processed by transport system 25.

Multiplexer (mux) 37 of service detector 33 is provided, via selector 35, with either the output from decoder 30, or the decoder 30 output further processed by a descrambling unit 40. Descrambling unit 40 may be, for example, a removable unit such as a smart card in accordance with ISO 7816 and NRSS (National Renewable Security Standards) Committee standards (the NRSS removable conditional access system is defined in EIA Draft Document IS-679, Project PN-3639). Selector 35 detects the presence of an insertable, compatible, descrambling card and provides the output of unit 40 to mux 37 only if the card is currently inserted in the video receiver unit. Otherwise selector 35 provides the output from decoder 30 to mux 37. The presence of the insertable card permits unit 40 to descramble additional premium program channels, for example, and provide additional program services to a viewer. It should be noted that in the preferred embodiment NRSS unit 40 and smart card unit 130 (smart card unit 130 is discussed later) share the same system 25 interface such that only either an NRSS card or a smart card may be inserted at any one time. However, the interfaces may also be separate to allow parallel operation.

The data provided to mux 37 from selector 35 is in the form of an MPEG compliant packetized transport datastream as defined in MPEG systems standard section 2.4 and includes program guide information and the data content of one or more program channels. The individual packets that comprise particular program channels are identified by Packet Identifiers (PIDs). The transport stream contains Program Specific Information (PSI) for use in identifying the PIDs and assembling individual data packets to recover the content of all the program channels that comprise the packetized datastream. Transport system 25, under the control of the system controller 115, acquires and collates program guide information from the input transport stream, storage device 90 or an internet service provider via the communication interface unit 116. The individual packets that comprise either particular program channel content or Program Guide information, are identified by their Packet Identifiers (PIDs) contained within header information. As discussed above, the program description contained in the program guide information may comprise different program descriptive fields such as title, star, rating, etc., relating to a program.

The user interface incorporated in the video receiver shown in Figure 3 enables a user to activate various features by selecting a desired feature from an on-screen display (OSD) menu. The OSD menu may include an electronic program guide (EPG) as described above, and other features discussed below.

Data representing information displayed in the OSD menu is generated by system controller 115 in response to stored on-screen display (OSD) information representing text/graphics, stored program guide information, and/or program guide and text/graphics information received via the input signal as described above and in accordance with exemplary control programs to be shown in Figs . 6 - 8, and to be discussed below. The software control programs may be stored, for example, in embedded memory (not shown) of system controller 115.

Using remote control unit 125 (or other selection means such as a mouse) a user can select from the OSD menu items such as a program to be viewed, a program to be stored (e.g., recorded), the type of storage media and manner of storage. System controller 115 uses the selection information, provided via interface 120, to configure system 25 to select the programs for storage and display and to generate PSI suitable for the selected storage device and media. Controller 115 configures system 25 elements 45, 47, 50, 55, 65 and 95 by setting control register values within these elements via a data bus and by selecting signal paths via muxes 37 and 110 with control signal C.

In response to control signal C, mux 37 selects either, the transport stream from unit 35, or in a playback mode, a datastream retrieved from storage device 90 via store interface 95. In normal, non-playback operation, the data packets comprising the program that the user selected to view are identified by their PIDs by selection unit 45. If an encryption indicator in the header data of the selected program packets indicates the packets are encrypted, unit 45 provides the packets to decryption unit 50. Otherwise unit 45 provides non-encrypted packets to transport decoder 55. Similarly, the data packets comprising the programs that the user selected for storage are identified by their PIDs by selection unit 47. Unit 47 provides encrypted packets to decryption unit 50 or non-encrypted packets to mux 110 based on the packet header encryption indicator information.

The functions of decryptors 40 and 50 may be implemented in a single removable smart card which is compatible with the NRSS standard. The approach places all security related functions in a removable unit that can easily be replaced if a service provider decides to change encryption techniques or to permit easily changing the security system, e.g., to descramble a different service.

Units 45 and 47 employ PID detection filters that match the PIDs of incoming packets provided by mux 37 with PID values pre-loaded in control registers within units 45 and 47 by controller 115. The pre-loaded PIDs are used in units 47 and 45 to identify the data packets that are to be stored and the data packets that are to be decoded for use in providing a video image. The pre-loaded PIDs are stored in look-up tables in units 45 and 47. The PID look-up tables are memory mapped to encryption key tables in units 45 and 47 that associate encryption keys with each pre-loaded PID. The memory mapped PID and encryption key look-up tables permit units 45 and 47 to match encrypted packets containing a pre-loaded PID with associated encryption keys that permit their decryption. Non-encrypted packets do not have associated encryption keys. Units 45 and 47 provide both identified packets and their associated encryption keys to decryptor 50. The PID look-up table in unit 45 is also memory mapped to a destination table that matches packets containing pre-loaded PIDs with corresponding destination buffer locations in packet buffer 60. The encryption keys and destination buffer location addresses associated with the programs selected by a user for viewing or storage are pre-loaded into units 45 and 47 along with the assigned PIDs by controller 115. The encryption keys are generated by ISO 7816-3 compliant smart card system 130 from encryption codes extracted from the input datastream. The generation of the encryption keys is subject to customer entitlement determined from coded information in the input data stream and/or pre-stored on the insertable smart card itself (International Standards Organization document ISO 7816-3 of 1989 defines the interface and signal structures for a smart card system).

The packets provided by units 45 and 47 to unit 50 are encrypted using an encryption technique such as the Data Encryption Standard (DES) defined in Federal Information Standards (FIPS) Publications 46, 74 and 81 provided by the National Technical Information Service, Department of Commerce. Unit 50 decrypts the encrypted packets using corresponding encryption keys provided by units 45 and 47 by applying decryption techniques appropriate for the selected encryption algorithm. The decrypted packets from unit 50 and the non-encrypted packets from unit 45 that comprise the program for display are provided to decoder 55. The decrypted packets from unit 50 and the non-encrypted packets from unit 47 that comprise the program for storage are provided to mux 110.

Unit 60 contains four packet buffers accessible by controller 115. One of the buffers is assigned to hold data destined for use by controller 115 and the other three buffers are assigned to hold packets that are destined for use by application devices 75, 80 and 85. Access to the packets stored in the four buffers within unit 60 by both controller 115 and by application interface 70 is controlled by buffer control unit 65. Unit 45 provides a destination flag to unit 65 for each packet identified by unit 45 for decoding. The flags indicate the individual unit 60 destination locations for the identified packets and are stored by control unit 65 in an internal memory table. Control unit 65 determines a series of read and write pointers associated with packets stored in buffer 60 based on the First-In-First-Out (FIFO) principle. The write pointers in conjunction with the destination flags permit sequential storage of an identified packet from units 45 or 50 in the next empty location within the appropriate destination buffer in unit 60. The read pointers permit sequential reading of packets from the appropriate unit 60 destination buffers by controller 115 and application interface 70.

The non-encrypted and decrypted packets provided by units 45 and 50 to decoder 55 contain a transport header as defined by section 2.4.3.2 of the MPEG systems standard. Decoder 55 determines from the transport header whether the non-encrypted and decrypted packets contain an adaptation field (per the MPEG systems standard). The adaptation field contains timing information including, for example, Program Clock References (PCRs) that permit synchronization and decoding of content packets. Upon detection of a timing information packet, that is a packet containing an adaptation field, decoder 55 signals controller 115, via an interrupt mechanism by setting a system interrupt, that the packet has been received. In addition, decoder 55 changes the timing packet destination flag in unit 65 and provides the packet to unit 60. By changing the unit 65 destination flag, unit 65 diverts the timing information packet provided by decoder 55 to the unit 60 buffer location assigned to hold data for use by controller 115, instead of an application buffer location.

Upon receiving the system interrupt set by decoder 55, controller 115 reads the timing information and PCR value and stores it in internal memory. PCR values of successive timing information packets are used by controller 115 to adjust the system 25 master clock (27 MHz). The difference between PCR based and master clock based estimates of the time interval between the receipt of successive timing packets, generated by controller 115, is used to adjust the system 25 master clock. Controller 115 achieves this by applying the derived time estimate difference to adjust the input control voltage of a voltage controlled oscillator used to generate the master clock. Controller 115 resets the system interrupt after storing the timing information in internal memory.

Packets received by decoder 55 from units 45 and 50 that contain program content including audio, video, caption, and other information, are directed by unit 65 from decoder 55 to the designated application device buffers in packet buffer 60. Application control unit 70 sequentially retrieves the audio, video, caption and other data from the designated buffers in buffer 60 and provides the data to corresponding application devices 75, 80 and 85. The application devices comprise audio and video decoders 80 and 85 and high speed data port 75. For example, packet data corresponding to a composite program guide generated by the controller 115 as described above and as shown in Fig. 5, may be transported to the video decoder 85 for formatting into video signal suitable for display on a monitor (not shown) connected to the video decoder 85. Also, for example, data port 75 may be used to provide high speed data such as computer programs, for example, to a computer. Alternatively, port 75 may be used to output data to an HDTV decoder to display images corresponding to a selected program or a program guide, for example.

Packets that contain PSI information are recognized by unit 45 as destined for the controller 115 buffer in unit 60. The PSI packets are directed to this buffer by unit 65 via units 45, 50 and 55 in a similar manner to that described for packets containing program content. Controller 115 reads the PSI from unit 60 and stores it in internal memory.

Controller 115 also generates condensed PSI (CPSI) from the stored PSI and incorporates the CPSI in a packetized datastream suitable for storage on a selectable storage medium. The packet identification and direction is governed by controller 115 in conjunction with the unit 45 and unit 47 PID, destination and encryption key look-up tables and control unit 65 functions in the manner previously described.

In addition, controller 115 is coupled to a communication interface unit 116 that operates in a manner similar to interface unit 1113 in Figure 2. That is, unit 116 provides the capability to upload and download information to and from the internet. Communication interface unit 116 includes, for example, a modem for connecting to an internet service provider, e.g., via a telephone line or via a cable television line. The communication capability allows the system shown in Figure 3 to provide email capability and internet related features such as web browsing in addition to receiving television programming.

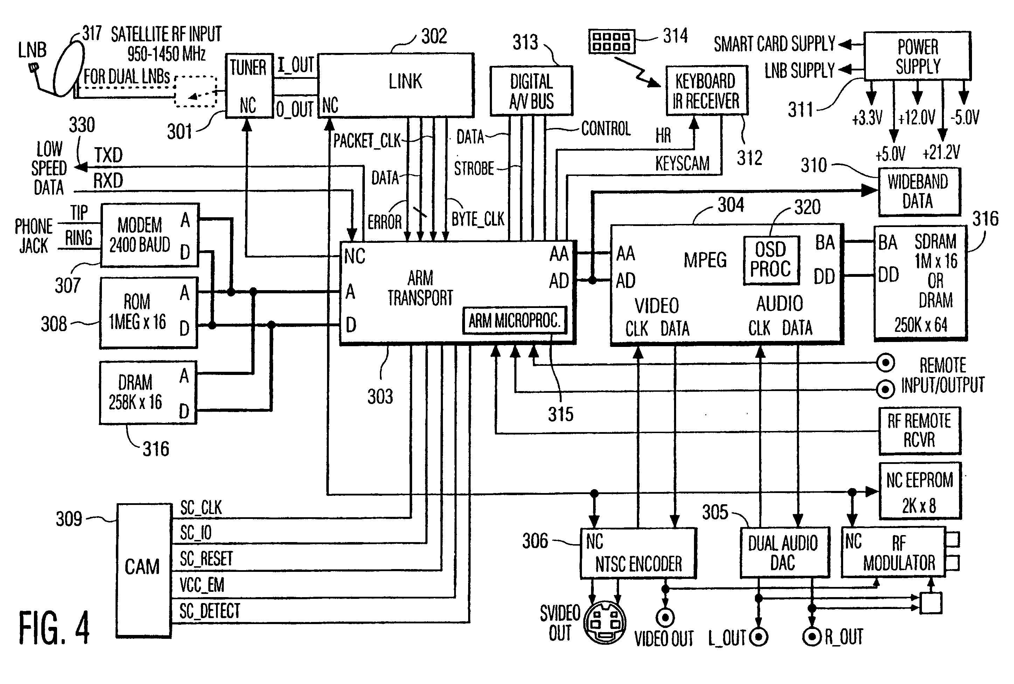

Fig. 4 is a specific implementation of an electronic device generally shown in Fig. 3 and described in detail above. Fig. 4 represents a satellite receiver set-top box, designed and manufactured by Thomson Consumer Electronics, of Indianapolis, Indiana, USA, for receiving DirecTV™ satellite service provided by Hughes Electronics.

As shown in Fig. 4, the set-top box has a tuner 301 which receives and tunes applicable satellite RF signals in the range of 950-1450 Mhz from a satellite antenna 317. The tuned analog signals are outputted to a link module 302 for further processing. Link module 302 is responsible for further processing of the analog tuned signals Lout and Q_out from tuner 301, including filtering and conditioning of the analog signals, and conversion of the analog signals into a digital output signal, DATA. The link module 302 is implemented as an integrated circuit (IC). The link module IC is manufactured by SGS-Thomson Microelectronics of Grenoble, France, and has Part No. ST 15339-610.

The digital output, DATA, from the link module 302 consists of compliant packetized data stream recognized and processable by the transport unit 303. The datastream, as discussed in detail in relation to Fig. 3, includes program guide data information and the data content of one or more program channels of the satellite broadcast service from Direct TV™. As discussed above, program guide data contains information relating to the type of program (e.g., audio-only, video-only, etc.) as indicated, for example, by the "class" type.

The function of the transport unit 303 is the same as the transport system 25 shown in Fig. 3 and discussed already. As described above, the transport unit 303, processes the packetized data stream according to the Packet Identifiers (PID) contained in the header information. The processed data stream is then formatted into MPEG compatible, compressed audio and video packets and coupled to a MPEG decoder 304 for further processing.

The transport unit 303 is controlled by an Advanced RISC Microprocessor (ARM) 315 which is a RISC based microprocessor. The ARM processor 315 executes control software residing in ROM 308. Exemplary components of the software may be, for example, control programs shown in Figs. 6 - 8 for processing user interface commands and displaying OSD information in accordance with aspects of the present invention as will be discussed below.

The transport unit 303 is typically implemented as an integrated circuit. For example, a preferred embodiment is an IC manufactured by SGS-Thomson Microelectronics and has a Part No. ST 15273-810 or 15103-65C.

The MPEG compatible, compressed audio and video packets from the transport unit 303 are delivered to a MPEG decoder 304. The MPEG decoder decodes the compressed MPEG datastream from the transport unit 303. The decoder 304 then outputs the applicable audio stream which can be further processed by the audio digital-to-analog converter (DAC) 305 to convert the digital audio data into analog sound. The decoder 304 also outputs applicable digital video data which represents image pixel information to a NTSC encoder 306. The NTSC encoder 306 then further processes this video data into NTSC compatible analog video signal so that video images may be displayed on a regular NTSC television screen. The MPEG decoder as described above may be implemented as an integrated circuit. One exemplary embodiment may be an MPEG decoder IC manufactured by SGS-Thomson Microelectronics having Part No. ST I3520.

Included in the MPEG processor 304 is an OSD processor 320. The OSD processor 320 reads data frorm SDRAM 316 which contains stored OSD information. OSD information corresponds to bitmap OSD graphics/text images. The OSD processor is capable of varying the color and/or translucency of each pixel of an OSD image under the control of the ARM microprocessor 315 in a conventional manner.

The OSD processor is also responsible for generating an exemplary program guide as shown in Fig. 5 under the control of the ARM processor 315. In the exemplary embodiment, upon detecting a user request to generate a guide display, the ARM microprocessor 315 processes the program guide data information obtained from a data stream provided by a program guide information provider and formats the guide data information into OSD pixel data corresponding to a "grid guide" as shown in Fig. 5. The OSD pixel data from the transport unit 303 is then forwarded to OSD processor 320 in the MPEG audio/video decoder 304 for generating the guide image, as described before.

As shown in Fig. 5, the "grid guide" 500 typically occupies the whole screen of a display. The grid guide 500 shows a program schedule in a time-and-channel format, similar to a TV schedule listed in a newspaper. In particular, one dimension (e.g., horizontal) of the guide shows the time information while the other dimension (e.g., vertical) of the guide shows the channel information. The time information is conveyed to the user by having a time line 501 on the top portion of the guide and is demarked by half hour intervals. The channel information is conveyed to the user by channel numbers 510 - 516 and corresponding channel station names 520 - 526.

In addition, the program guide 500 contains icons Internet 550 and Email 560. By clicking on these icons, a user can surf the internet and send/receive email respectively through the communication interface unit 307. In addition, an internet web site icon may also be incorporated into a grid of a program guide. For example, by clicking on "ESPN.com" within grid 570, the user will automatically be linked to, for example, an ESPN web site.

A low speed data port 330 is used to connect to an IR-Blaster (not shown) for controlling a VCR for recording a program. As discussed before, an IR blaster is basically a programmable VCR remote control emulator controlled by the satellite receiver shown in Fig. 4. It is positioned in front of a VCR remote sensor of an attached VCR and will transmit commands such as "ON" and "RECORD" under the control of the satellite receiver at the appropriate time, according to the timer screen information entered by the users.

Additional relevant functional blocks of Fig. 4 include modem 307 which corresponds to the communication interface unit 116 shown in Fig. 3 for access to the internet, for example. Conditional Access Module (CAM) 309, corresponds to the NRSS decryption unit 130 shown in Fig. 3 for providing conditional access information. Wideband data module 310 corresponds to High Speed Data Port 75 shown in Fig. 3 for providing high speed data access to, for example, a HDTV decoder or a computer. A keyboard/IR Receiver module 312 corresponds to Remote Unit interface 120 shown in Fig. 3 for receiving user control commands from a user control unit 314. Digital AV bus module 313 corresponds to I/O port 100 shown in Fig. 3 for connection to an external device such as a VCR or a DVD player.

Figs. 6 - 8 show exemplary control programs in flow chart form, which may be executed by either the CPU 1112 of Fig. 2, Controller 115 of Fig. 3, or ARM microprocessor 315 of Fig. 4 to implement the features according to the present invention. A person skilled in the art would readily recognize that these control programs when executed by any one of the systems described in Figs. 2-4 will provide the same features in accordance with the present invention. Therefore, to avoid redundancy, the exemplary control programs shown in Figs. 6-8 will be described below only with respect to the exemplary hardware implementation shown in Fig. 4.

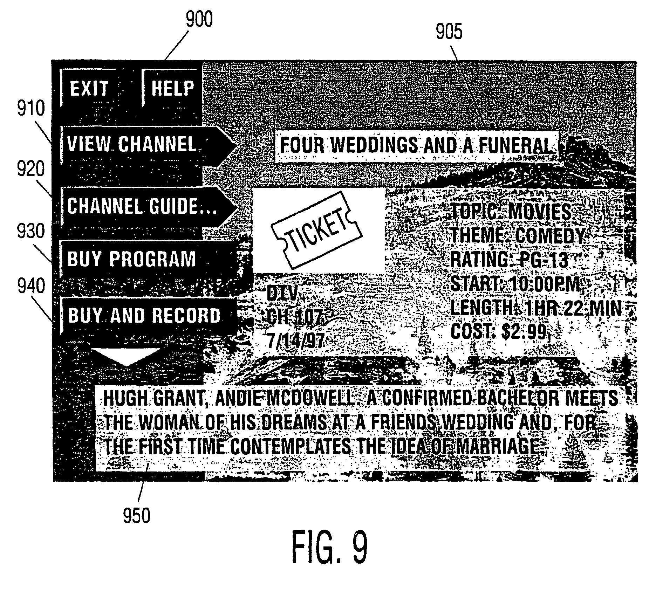

As discussed above, in the system shown in Fig. 4, a user may select a program, for example, by simply highlighting the grid containing the desired program in an electronic program guide as shown in Fig. 5. In addition, if a program selected is a pay-per-view event, the ARM controller 315 of the system shown in Fig. 4, will cause the OSD processor 320 to display an exemplary "program details" screen as shown in Fig. 9.

Fig. 9 shows an exemplary screen 900 which provides a user with further options and detailed information about a pay-per-view program selected. For example, the detailed information includes an area 950 which contains title, topic, theme, rating, start time, length, cost and a short description of the program, etc. In addition, screen 900 provides a user with several selectable user actions. The user actions include "view channel" 910, "channel guide" 920, "buy program" 930, and "buy and record" 940, as described below.

If a user selects the option of "view channel" 910, the ARM processor 315 will cause the system in Fig. 4 to tune to the channel corresponding to the selected program and displays a program preview (if a preview is available). If a user selects the option of "Channel Guide" 920, the ARM processor 315 will cause the system to go back and display the program guide as shown in Fig. 5.

As shown at step 602 of Fig. 6A, a user is further provided with the options of "buy program" 930 or "buy and record" a program 940. If the user selects the option of just buying a program, as shown at step 605, the ARM processor will first set a variable "record" to zero (0) as shown at step 607. The ARM processor 315 will then check to see whether the user has exceeded his or her purchase spending limits as shown at step 619. A purchase limit is similar to a pre-set credit card limit for credit cards, it allows a pay-per-view service provider to limit its own financial risks and to avoid potential frauds.

As shown at step 625, if this pre-set spending limit is not exceeded, the ARM processor 315 will proceed to process and store purchase information for this selected pay-per-view program. Basically, the ARM processor 315 will store, for example, the start and stop times of the selected program and causing tuner 301 to tune to the appropriate channel and decrypt the purchased pay-per-view program at the appropriate time. Once the purchase information is processed as shown at step 625, the ARM processor 315 will check to see whether the "record" variable has been set to one (1), indicating a record request. Since this is the buy-only case, "record" was previously set to zero at step 607. Therefore, the control program will branch to "A", at step 650 of Fig. 6B.

If on the other hand, a user has selected to both buy and record a program, the control program shown in Fig. 6A will branch to step 609. In addition, when this option is selected, an additional charge for taping, could be displayed by the OSD processor to notify the user that additional charge may applied. The ARM processor 315 will then proceed to set the "record" variable to one (1) at step 611. The ARM processor will then check to see whether a timer slot is still available to be programmed for recording this selected event at step 615.

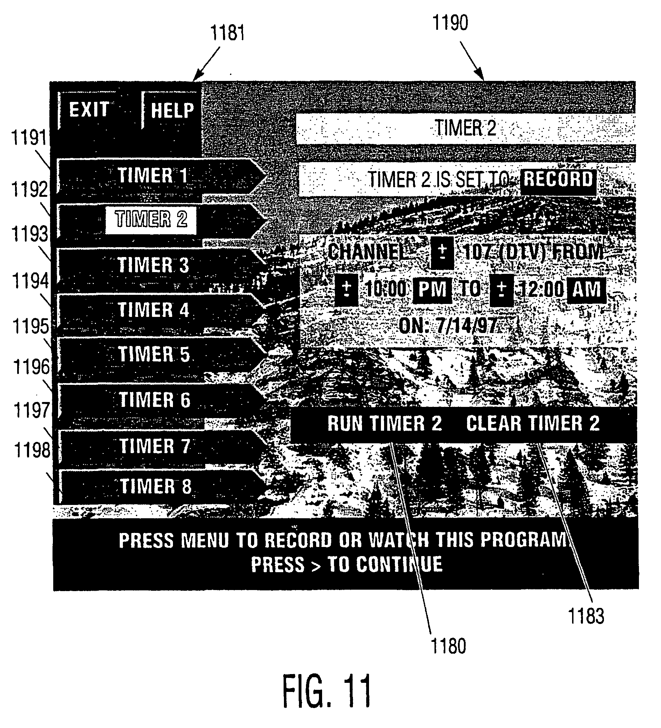

Fig. 11 shows an exemplary timer screen 1190 for programming various timers so that a user can program in advance to record or view programs. As shown in Fig. 11, eight timer slots 1191 - 1198 are available for this exemplary embodiment. The timer screen 1190 may be displayed, for example, when a user selects a "timer" button on the user control unit 314 or by highlight "timer" option from a main menu (not shown).

A user can then select one of the 8 timers 1191-1198 to be programmed for recording or viewing a program by completing an on-screen sentence 1199. The aspects of completing a sentence to set a timer for viewing or recording a program are discussed in detail in U.S. Pat. No. 5,682, 206, issued to Wehmeyer, etc., and assigned the to same assignee of the present invention. When the sentence is completed, the user may select "Run timer" to complete the timer programming for the timer selected.

Returning to discussing the flow diagram of Fig. 6A, at step 615, if an empty timer is available, then the ARM processor 315 will proceed to check the spending limit for the user as discussed above and as shown at step 619. As shown at step 625, if this pre-set spending limit is not exceeded for this user, then the ARM processor 315 will proceed to process and store the purchase information for this selected pay-per-view program at step 625, as discussed above. Since "record" variable has been set to 1 at step 611 indicating that this program has also been selected for recording, the control program will proceed to determine whether there is a timer conflict at step 629.

A timer conflict exists when any two of the timers shown, for example, in the timer screen 1190 of Fig. 11 have been programmed with event times which overlap each other. For example, there is a timer conflict if timer 1 is programmed with an event which starts at 9:00 am and ends at 10:00 am and timer 3 is programmed with an event which starts at 9:30 am and ends at 10:30 am on the same date. There is a timer conflict between timer 1 and timer 3 in this case, since a portion of their respective program time overlaps each other. This causes a problem because the system shown, for example, in Fig. 4, can only provide output for one program at a time.

In order to convey the timer conflict information to users, the exemplary screen shown in Fig. 11 includes symbols to alert users about which timers have a timer conflict. For example, as shown on the screen 1190 of Fig. 11, the symbols may be broken clock faces 1181 and 1182, appearing respectively next to timers 1191 and 1193. The symbols indicate to a user that timers 1 and 3 have timer conflict so that the user can reprogram either timer to avoid the conflict.

If a timer conflict exists for this selected program, as determined at step 629 of Fig. 6A, then the ARM microprocessor 315 will cause the OSD processor 320 to display a timer conflict screen (not shown) for a user to resolve the timer conflict. An example of a timer conflict screen may simply be a warning message to the user that a timer conflict exists for this selected program and the user is given the option of either canceling this program selection or to resolve the conflict. If the user selects to resolve the timer conflict, the program of Fig. 6A proceeds to confirm a password or make sure a password has been confirmed, giving the user the authority to change timers, shown at step 633. After the password has been confirmed, the ARM processor will cause the OSD processor 320 to display, for example, the timer display screen 1190 of Fig. 11 so that the user can proceed to resolve any timer conflict. The user can resolve the timer conflict by changing or selecting the timer that is in conflict with the timer of the current selected program. This new time information for the timer that has been changed is then stored and a timer flag is set to 1 as shown at step 641. The program will then jump to point A, step 650, of Fig. 6B.

Continue on at step 645 of Fig. 6B for the user action of buying and recording a program, the ARM processor 315 will prompt the user to confirm the purchase. If the user confirms the purchase, the ARM processor 315 will perform the necessary process to finalize the purchase, including updating relevant program registers, including setting variable "PURCH-FLAG" to one (1), and storing the purchase information in memory 316, for xample.

The ARM processor 315 will then check to see whether "timer flag" has been set to 1, indicating that a record has been selected and that there is no timer conflict, at step 649. If the timer flag is set to 1, then the ARM processor 315 will proceed to store this program in a list of programs representing programs to be recorded. As shown at step 651, the ARM processor 315 will first choose an available timer from the list of timers shown, for example, in Fig 11. The ARM processor 315 will then proceed to automatically populate the blank fields in the programming sentence 1199 of the chosen timer with information relating to this selected program. This allows the selected program to be recorded at the proper time. After the timer is correctly setup at step 651, the control program will return to the point of entry (POE), at step 601.

At this point, if a user is to invoke the timer display screen 1190 shown in Fig. 11, the screen would show that timer 2 has been programmed for this pay-per-view program automatically by the ARM processor 315. This can be seen by looking at the information on the programming sentence 1199 which corresponds to the time of this pay-per-view program and that the "record" command has been selected in the programming sentence 1199. In addition, the "$" symbol next Timer 2 (i.e., element 1192) indicates to the viewer that this is a purchased or pay-per-view event. The unbroken clock next to the "$" indicates that there is no timer conflict between timer 2 and any other timers.

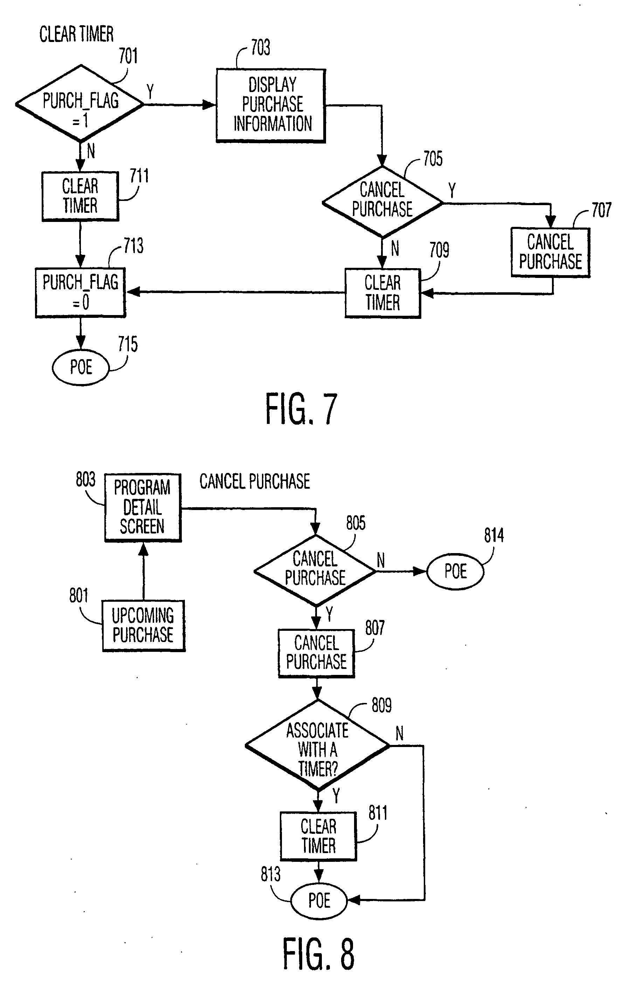

Figs. 7 and 8 show further aspects of automatic coordinations between the user actions of programming a timer and programming a purchase in accordance with the present invention. Fig. 7 is a flow chart for processing a user action to clear one of the timers 1191-1198 shown in Fig. 11. The user can select to clear a timer by first choosing the timer to be cleared, for example, timer 2, as shown in Fig. 11 and then by highlighting "Clear Timer 2" 1183 using user control unit 314.

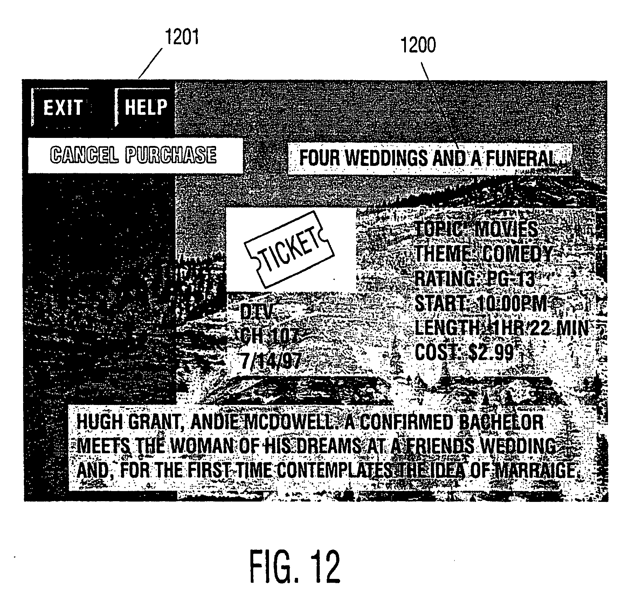

Once "Clear Timer 2 " 1183 is selected, the program shown in Fig. 7 will first determine whether this selected timer 2 is related to a purchased event, as indicated by whether the variable PURCH_FLAG is set to 1, shown at step 701. If this timer is related to a purchased pay-per-view event, then the ARM microprocessor 315 will cause an exemplary display screen 1200 as shown in Fig. 12 to be displayed. The display screen 1200 includes description about the purchased event similar to that shown in Fig. 9 previously discussed. Included on the screen is the option of "Cancel Purchase" 1201. If the user then highlights this option as shown at step 705, this purchase will be canceled, as shown at step 707. The program will then proceed to clear timer 2 as indicated at step 709. The program then proceeds to set PURCH_FLAG to 0, since this program is no longer being purchased. The program in Fig. 7 will then jump back to the point of entry (POE) as indicated at step 715.

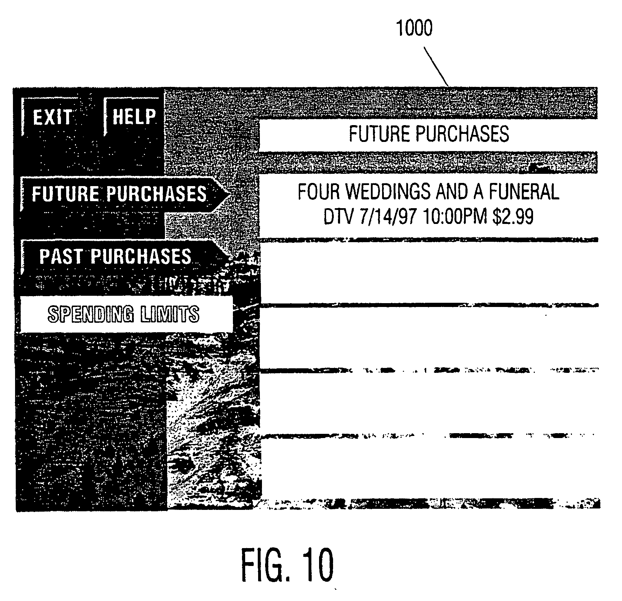

Fig. 8 shows a flow chart for canceling a purchase of a program in accordance with the present invention. At step 801, a user may request the ARM processor 315 to display a list of upcoming purchases already exists in the system by highlighting the "Future Purchase" option in an exemplary user interface display screen 1000 as shown in Fig. 10. The user may then select the particular program on the list by using the navigation keys of the user control unit 314. At step 803, once a program is selected, the ARM processor will display the program detail screen as shown in Fig. 12 and as described above. Again, included on the screen 1200 is the option of "Cancel Purchase" 1201. If the user highlights this option as shown at step 805, this purchase will be canceled, as shown at step 807. The program of Fig. 8 will then proceed to check whether this purchased program has an associated timer for, for example, recording the program, at step 809. If there is a timer associated with this program, then the timer will also be cleared automatically as shown at step 811. The program will then jump back to the point of entry (POE) at step 813.

It is to be understood that the embodiments and variations shown and described herein are for illustrations only and that various modifications may be implemented by those skilled in the art without departing from the scope of the invention.

## Claims

1. An apparatus for receiving a plurality of programs, comprising:
user interface means for selecting a program from said plurality of programs and for selecting a user action;
a controller, which in response to a first user action for selecting a first program for recording, stores said first program in a first list representing a list of programs to be recorded, and in response to a second user action for selecting a second program for both purchasing and recording, stores said second program on a second list representing a list of programs purchased and also stores said second program on said first list.

2. The apparatus of claim 1 wherein said first list includes a timer conflict indication for programs having a timer conflict.

3. The apparatus of claim 1 wherein said first list includes a purchase indication for said second program.

4. The apparatus of claim 1 wherein said controller first determines whether there is a timer conflict between said second program and another program on said first list before storing said second program on said first list.

5. The apparatus of claim 4 wherein said controller prompts a user to resolve said timer conflict if said timer conflict exists.

6. An apparatus for processing a program, comprising:
a controller for displaying a first list representing programs selected for recording;
said controller for displaying a second list representing programs selected for purchasing; and
said controller, which in response to user selection of said program for both purchasing and recording, automatically enters said program into said first list and said second list.

7. The apparatus of claim 6 wherein said first list includes a timer conflict indication for programs having a timer conflict.

8. The apparatus of claim 6 wherein said first list includes a purchase indication for said program.

9. The apparatus of claim 6 wherein said controller first determines whether there is a timer conflict between said program and another program on said first list before entering said program on said first list.

10. The apparatus of claim 9 wherein said controller prompts a user to resolve said timer conflict if said timer conflict exists.

11. An apparatus for processing a plurality of programs, comprising:
user interface means for selecting a program from said plurality of programs and for selecting a user action;
a controller, which in response to a first user action for canceling a first program for recording, removes said first program from a first list representing a list of programs to be recorded, and in response to a second user action for canceling a second program for purchasing, removes said second program from a second list representing a list of programs purchased and also removes said second program from said first list, if said second program appears on said first list.

12. An apparatus for processing a program, comprising:
on screen display means for displaying a first list representing programs selected for recording;
on screen display means for displaying a second list representing programs selected for purchasing;
user control means for removing said program from said first and second lists; and
control means, which in response to said user removal of said program from said second list, automatically removes said program from said first list, if said second program appears on said first list.

13. A method for processing a plurality of programs, comprising:
selecting a first program for recording from said plurality of programs;
storing said first program in a first list;
selecting a second program for both purchasing and recording;
storing said second program in a second list representing programs purchased; and
storing, automatically, said second program in said first list.

14. The method of claim 13 further comprising the step of determining whether there is a timer conflict between said second program and another program on said first list before storing said second program on said first list.

15. The method of claim 14 further comprising the step of prompting a user to resolve said timer conflict if said timer conflict exists.

16. A method for processing a plurality of programs, comprising:
selecting a first program for removing from a first list representing a list of programs selected for recording;
selecting a second program for removing from a second list representing a list of programs purchased;
determining whether said second program also appears on said first list; and
removing, automatically, said second program from said first list if said second program appears on said first list.

17. A method of processing a program, comprising:
removing, in response to a user command, said program from a first list of programs representing programs scheduled for recording;
determining whether said program is also a purchased program; and
removing, automatically, said program from a second list of programs representing purchased programs, if said program is also a purchased program.

## Patentansprüche

1. Vorrichtung zum Empfang von mehreren Programmen mit:
Benutzerschnittstellen-Mitteln zur Wahl eines Programms aus den mehreren Programmen und zur Wahl einer Benutzerbetätigung,
einer Steuereinheit, die aufgrund einer ersten Benutzerbetätigung für die Wahl eines ersten Programms für die Aufzeichnung das erste Programm in einer ersten Liste speichert, die eine Liste von aufzuzeichnenden Programmen darstellt, und aufgrund einer zweiten Benutzerbetätigung zur Wahl eines zweiten Programms für den Kauf und die Aufzeichnung das zweite Programm auf einer zweiten Liste speichert, die eine Liste von gekauften Programmen darstellt, und auf der ersten Liste außerdem das zweite Programm speichert.

2. Vorrichtung nach Anspruch 1, wobei die erste Liste eine Anzeige für einen Timer-Konflikt für Programme mit einem Timer-Konflikt enthält.

3. Vorrichtung nach Anspruch 1, wobei die erste Liste eine Kaufanzeige für das zweite Programm enthält.

4. Vorrichtung nach Anspruch 1, wobei die Steuereinheit zuerst ermittelt, ob ein Timer-Konflikt zwischen dem zweiten Programm und einem anderen Programm auf der ersten Liste besteht, bevor das zweite Programm auf der ersten Liste gespeichert wird.

5. Vorrichtung nach Anspruch 4, wobei die Steuereinheit einen Benutzer auffordert, den Timer-Konflikt zu lösen, wenn der Timer-Konflikt existiert.

6. Vorrichtung zur Verarbeitung eines Programms mit:
einer Steuereinheit zur Wiedergabe einer ersten Liste, die für die Aufzeichnung gewählte Programme darstellt,
der Steuereinheit für die Wiedergabe einer zweiten Liste, die für den Kauf gewählte Programme darstellt, und
der Steuereinheit, die aufgrund der Benutzerwahl des Programms für den Kauf und die Aufzeichnung automatisch in das Programm in die erste Liste und die zweite Liste eintritt.

7. Vorrichtung nach Anspruch 6, wobei die erste Liste eine Timer-Konflikt-Anzeige für Programme mit einem Timer-Konflikt enthält.

8. Vorrichtung nach Anspruch 6, wobei die erste Liste eine Kaufanzeige für das Programm enthält.

9. Vorrichtung nach Anspruch 6, wobei die Steuereinheit zuerst ermittelt, ob es einen Timer-Konflikt zwischen dem Programm und einem anderen Programm auf der ersten Liste vor dem Eintritt in das Programm auf der ersten Liste gibt.

10. Vorrichtung nach Anspruch 9, wobei die Steuereinheit einen Benutzer auffordert, den Timer-Konflikt zu lösen, wenn der Timer-Konflikt existiert.

11. Vorrichtung zur Verarbeitung mehrerer Programme mit:
Benutzerschnittstellen-Mitteln zur Wahl eines Programms aus den mehreren Programmen und zur Wahl einer Benutzerbetätigung,
einer Steuereinheit, die aufgrund einer ersten Benutzerbetätigung für die Streichung eines ersten Programms für die Aufzeichnung das erste Programm aus einer ersten Liste beseitigt, die eine Liste von aufzuzeichnenden Programmen darstellt, und aufgrund einer zweiten Benutzerbetätigung zur Löschung eines zweiten Programms für den Kauf das zweite Programm von einer zweiten Liste entfernt, die eine Liste von gekauften Programmen darstellt, und außerdem das zweite Programm aus der ersten Liste entfernt, wenn das zweite Programm auf der ersten Liste erscheint.

12. Vorrichtung zur Verarbeitung eines Programms mit:
Bildschirmwiedergabe-Mitteln zur Wiedergabe einer ersten Liste, die für die Aufzeichnung gewählte Programme darstellt,
Bildschirmwiedergabe-Mitteln zur Wiedergabe einer zweiten Liste, die für den Kauf gewählte Programme darstellt,
Benutzer-Steuermitteln zur Beseitigung des Programms aus der ersten und aus der zweiten Liste und
Steuermitteln, die aufgrund der Entfernung durch den Benutzer des Programms aus der zweiten Liste automatisch das Programm aus der ersten Liste entfernen, wenn das zweite Programm auf der ersten Liste erscheint.

13. Verfahren zur Verarbeitung von mehreren Programmen mit:
Wahl eines ersten Programms für die Aufzeichnung aus den mehreren Programmen,
Speicherung des ersten Programms in einer ersten Liste,
Wahl eines zweiten Programms für den Kauf und die Aufzeichnung,
Speicherung des zweiten Programms in einer zweiten Liste, die gekaufte Programme darstellt und
automatische Speicherung des zweiten Programms in der ersten Liste.

14. Verfahren nach Anspruch 13 mit dem Schritt der Ermittlung, ob es einen Timer-Konflikt zwischen dem zweiten Programm und einem anderen Programm auf der ersten Liste gibt, bevor das zweite Programm auf der ersten Liste gespeichert wird.

15. Verfahren nach Anspruch 14 mit dem Schritt der Aufforderung an einen Benutzer, den Timer-Konflikt zu lösen, wenn der Timer-Konflikt existiert.

16. Verfahren zur Verarbeitung mehrerer Programme mit:
Wahl eines ersten Programms für die Entfernung von einer ersten Liste, die eine Liste von für die Aufzeichnung gewählten Programmen darstellt,
Wahl eines zweiten Programms zur Entfernung von einer zweiten Liste, die eine Liste von gekauften Programmen darstellt,
Ermittlung, ob das zweite Programm auch auf der ersten Liste erscheint, und
automatische Entfernung des zweiten Programms von der ersten Liste, wenn das Programm auf der ersten Liste erscheint.

17. Verfahren zur Verarbeitung eines Programms mit:
Entfernung des Programms von einer Liste von Programmen, die für die Aufzeichnung vorgesehene Programme darstellt, aufgrund eines Benutzerbefehls,
Ermittlung, ob das Programm auch ein gekauftes Programm ist, und
automatische Entfernung des Programms von einer zweiten Liste von Programmen, die gekaufte Programme darstellt, wenn das Programm ebenfalls ein gekauftes Programm ist.

## Revendications

1. Dispositif pour recevoir une pluralité de programmes, comprenant :
un moyen d'interface d'utilisateur pour sélectionner un programme parmi ladite pluralité de programmes et pour sélectionner une action d'utilisateur ;
un contrôleur, qui en réponse à une première action d'utilisateur pour sélectionner un premier programme à enregistrer, mémorise ledit premier programme dans une première liste représentant une liste de programmes à enregistrer, et en réponse à une deuxième action d'utilisateur pour sélectionner un deuxième programme à la fois à acheter et à enregistrer, mémorise ledit deuxième programme sur une deuxième liste représentant une liste de programmes achetés et mémorise aussi ledit deuxième programme sur ladite première liste.

2. Dispositif selon la revendication 1, dans lequel ladite première liste comporte une indication de conflit de temporisations pour les programmes ayant un conflit de temporisations.

3. Dispositif selon la revendication 1, dans lequel ladite première liste comporte une indication d'achat dudit deuxième programme.

4. Dispositif selon la revendication 1, dans lequel ledit contrôleur détermine d'abord s'il existe un conflit de temporisations entre ledit deuxième programme et un autre programme sur ladite première liste avant de mémoriser ledit deuxième programme sur ladite première liste.

5. Dispositif selon la revendication 4, dans lequel ledit contrôleur demande à un utilisateur de résoudre ledit conflit de temporisations si ledit conflit de temporisations existe.

6. Dispositif pour traiter un programme, comprenant :
un contrôleur pour afficher une première liste représentant des programmes à enregistrer sélectionnés ;
ledit contrôleur pour afficher une deuxième liste représentant des programmes à acheter sélectionnés ; et
ledit contrôleur, qui en réponse à la sélection d'utilisateur dudit programme à la fois acheter et enregistrer, entre automatiquement ledit programme dans ladite première liste et ladite deuxième liste.

7. Dispositif selon la revendication 6, dans lequel ladite première liste comporte une indication de conflit de temporisations pour les programmes ayant un conflit de temporisations.

8. Dispositif selon la revendication 6, dans lequel ladite première liste comporte une indication d'achat dudit programme.

9. Dispositif selon la revendication 6, dans lequel ledit contrôleur détermine d'abord s'il existe un conflit de temporisations entre ledit programme et un autre programme sur ladite première liste avant d'entrer ledit programme sur ladite première liste.

10. Dispositif selon la revendication 9, dans lequel ledit contrôleur demande à l'utilisateur de résoudre ledit conflit de temporisations si ledit conflit de temporisations existe.

11. Dispositif pour traiter une pluralité de programmes, comprenant :
un moyen d'interface d'utilisateur pour sélectionner un programme parmi ladite pluralité de programmes et pour sélectionner une action d'utilisateur ;
un contrôleur, qui en réponse à une première action d'utilisateur pour annuler un premier programme à enregistrer, supprime ledit premier programme d'une première liste représentant une liste de programmes à enregistrer, et en réponse à une deuxième action d'utilisateur pour annuler un deuxième programme à acheter, supprime ledit deuxième programme d'une deuxième liste représentant une liste de programmes achetés et supprime aussi ledit deuxième programme de ladite première liste, si ledit deuxième programme apparaît sur ladite première liste.

12. Dispositif pour traiter un programme, comprenant :
un moyen d'affichage sur écran pour afficher une première liste représentant des programmes à enregistfer sélectionnés ;
un moyen d'affichage sur écran pour afficher une deuxième liste représentant des programmes à acheter sélectionnés ;
un moyen de commande d'utilisateur pour supprimer ledit programme desdites première et deuxième listes ; et
un moyen de commande, qui en réponse à ladite suppression par l'utilisateur dudit programme de ladite deuxième liste, supprime automatiquement ledit programme de ladite première liste, si ledit deuxième programme apparaît sur ladite première liste.

13. Procédé pour traiter une pluralité de programmes, comprenant :
la sélection d'un premier programme à enregistrer parmi ladite pluralité de programmes ;
la mémorisation dudit premier programme dans une première liste ;
la sélection d'un deuxième programme à la fois acheter et enregistrer ;
la mémorisation dudit deuxième programme dans une deuxième liste représentant les programmes achetés ; et
la mémorisation, automatique, dudit deuxième programme dans ladite première liste.

14. Dispositif selon la revendication 13, comprenant en outre l'étape de détermination s'il existe un conflit de temporisations entre ledit deuxième programme et un autre programme sur ladite première liste avant de mémoriser ledit deuxième programme sur ladite première liste.

15. Procédé selon la revendication 14, comprenant en outre l'étape de demande à un utilisateur de résoudre ledit conflit de temporisations si ledit conflit de temporisations existe.

16. Procédé pour traiter une pluralité de programmes, comprenant :
la sélection d'un premier programme à supprimer d'une première liste représentant une liste de programmes à enregistrer sélectionnés ;
la sélection d'un deuxième programme à supprimer d'une deuxième liste représentant une liste de programmes achetés ;
la détermination si ledit deuxième programme apparaît aussi sur ladite première liste ; et
la suppression, automatique, dudit deuxième programme de ladite première liste si ledit programme apparaît sur ladite première liste.

17. Procédé de traitement d'un programme, comprenant :
la suppression, en réponse à une commande d'utilisateur, dudit programme d'une première liste de programmes représentant des programmes à enregistrer programmés ;
la détermination si ledit programme est aussi un programme acheté ; et
la suppression, automatique, dudit programme d'une deuxième liste de programmes représentant des programmes achetés, si ledit programme est aussi un programme acheté.
